# EUROPÄISCHE PATENTANMELDUNG

(11) **EP 1 195 418 A2**
(43) Veröffentlichungstag der Anmeldung: **10.04.2002**
(21) Anmeldenummer: 01127372.9
(22) Anmeldetag: 07.04.1997
(51) Int. Cl.: C09C 3/04, B01J 2/28

(54) **Brikettier- und Pressgranulate und deren Verwendung**

(30) Priorität: 18.04.1996 DE 19615261; 18.09.1996 DE 19638042
(62) Teilanmeldung aus: 97105720.3
(71) Anmelder: BAYER AG, 51368 Leverkusen (DE)
(72) Erfinder: Linde, Günther, Dr., 47800 Krefeld (DE); Schmidt-Park, Olaf, Dr., 200335 Shanghai (CN); Eitel, Manfred, Dr., 47906 Kempen (DE); Steiling, Lothar, Dr., 51373 Leverkusen (DE)

(57) **Zusammenfassung**

Die vorliegende Erfindung betrifft Brikettier- und Pressgranulate und deren Verwendung bei der Einfärbung von Baustoffen wie Beton und von organischen Medien wie Lacksystemen, Kunststoffen und Farbpasten.

## Beschreibung

Die vorliegende Erfindung betrifft Brikettier- und Pressgranulate und deren Verwendung bei der Einfärbung von Baustoffen wie Beton und Asphalt und von organischen Medien wie Lacksystemen, Kunststoffen und Farbpasten.

Die Verarbeitung von Pigmentgranulaten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie z.B. Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht. Dabei werden Aufbau- oder Sprühgranulation im Allgemeinen angewendet. Kompaktierverfahren sind bisher wegen der eingeschränkten Dispergierbarkeit der dadurch erhaltenen Granulate weniger geeignet.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften. Die mechanische Stabilität ist verantwortlich für gute Transporteigenschaften sowohl bei Transport zwischen Hersteller und Anwender als auch für gute Dosierung und Fließeigenschaften beim Einsatz der Pigmente. Sie wird durch hohe Haftkräfte bewirkt und hängt z.B. von Bindemittelmenge oder auch vom Pressdruck beim Verformen ab. Andererseits wird die Dispergierbarkeit durch eine gute Mahlung vor der Granulierung (Nass- und Trockenmahlung), die mechanische Energie bei der Einarbeitung (Scherkräfte) und Dispergierhilfsmittel beeinflusst, die die Haftkräfte im trockenen Granulat bei der Einarbeitung in ein Medium sofort herabsetzen. Allerdings ist bei Pigmenten die Anwendung von größeren Mengen Dispergierhilfsmittel wegen des Kostenverhältnisses Zusatz/Pigment eingeschränkt. Außerdem bewirkt ein hoher Zusatzanteil eine entsprechende Herabsetzung der Farbstärke bzw. des Streuvermögens. Da die Farbstärkeschwankungen im Allgemeinen unter ±5 % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der Endprodukte, wie z.B. Baustoffe, Kunststoffe und Lacke nachteilig verändern, beispielsweise bei Beton die Festigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften.

Nach dem Stand der Technik kommen als Herstellungsverfahren für Pigmentgranulate Sprühgranulation (Sprühtrocknung über Scheibe oder Düse) und Aufbaugranulation (Mischer, Wirbelschichtgranulator, Teller bzw. Trommel) in Frage.

Die Sprühtrocknungs-Granulation geht von Pigmentsuspensionen unter Verwendung von Bindemitteln aus. Entsprechende Verfahren sind in verschiedenen Schutzrechten beschrieben. Dabei werden wasserlösliche Bindemittel verwendet. So wird in DE-A 3 619 363, EP-A 0 268 645 und EP-A 0 365 046 von organischen Substanzen wie z.B. Ligninsulfonaten, Formaldehydkondensaten, Gluconsäuren, sulfatierten Polyglykolethern ausgegangen, während gemäß DE-A 3 918 694 und US-A 5 215 583 von anorganischen Salzen wie z.B. Silikat und Phosphat ausgegangen wird. Auch eine Kombination von Sprüh- und Aufbaugranulation ist in EP-A 0 507 046 beschrieben worden. In DE-A 3 619 363 (Spalte 3, Zeile 44-47) und EP-A 0 268 645 (Spalte 7, Zeile 18, 19) wird die Anwendung eines Kompaktierverfahrens ausgenommen. Bei diesem Verfahren wird durch Anwendung von Druck ein starker Zusammenhalt der Teilchen erreicht, so dass zwar eine gute Transportstabilität aber auch gleichzeitig erniedrigte Dispergiereigenschaften bewirkt werden.

In EP-A 0 257 423 und DE-A 3 841 848 wird die Sprühgranulation unter Verwendung von Polyorganosiloxanen als hydrophobe, lipophile Zusatzstoffe beschrieben. Die hydrophobierende Nachbehandlung führt bei sprühgranulierten Produkten zu einem sehr guten, fließenden, aber außerordentlich stark staubenden Granulat, das zudem schlecht mit Wasser benetzbar ist.

EP-A 0 424 896 offenbart die Herstellung von staubarmen Feingranulaten in einem Herstellungsgang in bekannten Intensivmischern. Es wird hierbei ein niedriger Gehalt an Wachsen in Kombination mit Emulgator und Netzmitteln durch Aufbringen einer wässrigen Dispersion angewendet. Dabei werden im Allgemeinen Wassergehalte von 20 bis über 50 % erhalten. Diese Granulate müssen zunächst getrocknet und von Über- und Unterkom getrennt werden.

DE-A 31 32 303 beschreibt staubarme, fließfähige anorganische Pigmentgranulate, die mit unter Wärmeeinwirkung flüssigwerdenden Bindemitteln gemischt und durch einen Siebvorgang unter Anwendung von Siebhilfe (Druck) granuliert werden. Dabei fällt ca. 10 bis 20 % des Durchsatzes als Feinanteil <0,1 mm an.

Aus EP-A 0 144 940 gehen staubarme Pigmentgranulate hervor, die ausgehend von Filterschlamm mit ca. 50 % Wasser durch Zugabe von 0,5-10 % oberflächenaktiven Stoffen und zusätzlich Mineralöl oder flüssigwerdenden Wachsen bei 50 bis 200°C gemischt werden bis zum Schmierpunkt. Der Vorgang erfolgt in Intensivmischern, eventuell wird noch nachgranuliert und nachgetrocknet. Im Endprodukt liegt Wasser in einer Menge von 10 bis 15 % vor, was für die Einarbeitung in Kunststoffen nachteilig ist.

Auch andere Verfahren sind in ihrer Anwendung eingeschränkt. Die Sprühgranulation erfordert wegen der Tropfenbildung die Verwendung von gut fließfähigen, also dünnflüssigen Suspensionen. Für den Trocknungsvorgang ist somit eine größere Menge an Wasser zu verdampfen als bei der häufig einsetzbaren Wirbelschichttrocknung aus hochausgepressten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muss.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren gemeinsam ist, dass der Bindemittelbedarf, meistens Wasser, groß ist, so dass als zusätzlicher Verfahrensschritt eine Trocknung nachfolgen muss. Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate mit einem Rücklauf von Über- und Unterkorn erforderlich.

Die Tellergranulation führt zu einem breiten Teilchengrößenspektrum von Granulaten. Wo dies wegen der schlechten Dispergierbarkeit zu großer Teilchen nicht erwünscht ist, muss durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkoms.

Extrusionsverfahren aus Pasten führen bei der Trocknung zu relativ festen Granulaten, die auch wegen ihrer Größe keine optimale Dispergierbarkeit gewährleisten.

Aus DE-A 42 14 195 ist ein Verfahren zur Einfärbung von Asphalt mit anorganischen Pigmentgranulaten beschrieben, wobei Öle als Bindemittel verwendet werden. Es handelt sich hierbei um ein einfaches Granulationsverfahren.

In DE-A 4 336 613 und DE-A 4 336 612 werden anorganische Pigmentgranulate aus Pigmenten durch Abmischung mit Bindemitteln, Kompaktierung, Schroten und Aufgranulierung hergestellt. Diese so hergestellten Granulate sind schlecht pneumatisch förderbar; bei der Förderung entsteht viel Staub, was unerwünscht ist.

Aufgabe der vorliegenden Anmeldung war es daher, die bisher beschriebenen Nachteile der Sprühgranulate, der Extrusionsgranulate oder der Aufbaugranulate aus Rußpigmenten zu vermeiden und ausreichend stabile, dosierfähige, staubarme Granulate von möglichst gleich guter Dispergierbarkeit wie die bisher verwendeten Pulver zur Verfügung zu stellen.

Es wurde nun gefunden, dass diese Aufgabe durch Granulate, erhältlich durch eine mehrstufige Kombination der Verfahrensschritte Mischen, Kompaktieren, Trennen und gegebenenfalls Abrunden gelöst werden kann.

Gegenstand der Erfindung sind homogene Press- oder Brikettiergranulate, erhältlich aus Rußpigmenten mit Hilfsmitteln, indem
a) ein oder mehrere Rußpigmente mit einem oder mehreren die Verarbeitbarkeit fördernden Hilfsmitteln vermischt werden,
b) diese Mischung einem Press- oder Brikettierschritt unterworfen wird,
c) dieses gepresste oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 µm und 1000 µm, liegen, als Produkt entnommen wird und gegebenenfalls in einem weiteren Schritt gerundet wird, die andere Fraktion bzw. Fraktionen aus dem Prozess ausgeschleust oder zurückgefihrt werden.

Vor dem Schritt c) kann das gepresste oder brikettierte Produkt vorzugsweise in zwei Fraktionen aufgetrennt werden (Zwischenschritt x), um dann die grobe Fraktion, in der mindestens 85 % der Teilchen größer 500 µm, bevorzugt 600 µm, sind, im Schritt c) zu zerkleinern und die andere, feine Fraktion im Schritt d) getrennt von oder zusammen mit dem Produkt aus Schritt c) abermals in zwei oder mehrere Fraktionen aufzutrennen.

Bevorzugt wird lediglich die feine Fraktion aus Zwischenschritt x) in zwei oder mehrere Fraktionen im Schritt d) aufgetrennt, während die grobe Fraktion aus Zwischenschritt x) im Schritt c) zerkleinert wird und dann als Produkt aus dem Prozess ausgeschleust wird.

Der Zwischenschritt x kann bevorzugt durch Sichten oder Sieben (mechanisches Trennen) erfolgen. Vorzugsweise werden Siebmaschinen eingesetzt.

Besonders bevorzugt wird das zerkleinerte Produkt in d) in zwei Fraktionen aufgetrennt, wobei der Feinanteil kleiner 80 µm ausgeschleust oder in den Prozess zurückgeführt wird und die grobe Fraktion größer 80 µm gegebenenfalls in einem weiteren Schritt gerundet wird.

Das zerkleinerte Produkt kann auch vorzugsweise in drei Fraktionen in Schritt d) aufgetrennt werden, wobei der Feinanteil und der Grobanteil aus dem Prozess ausgeschleust oder in den Prozess zurückgeführt werden und die mittlere Fraktion zwischen 80 und 2 000 µm, besonders bevorzugt zwischen 100 und 1000 µm, ganz besonders bevorzugt zwischen 100 und 500 µm, gegebenenfalls in einem weiteren Schritt gerundet wird.

Die Granulate weisen bevorzugt einen Restwassergehalt von unter 4 Gew.-% auf, besonders bevorzugt unter 2 Gew.-%. Dieser kann gegebenenfalls durch Nachtrocknung erhalten werden.

Der Rundungsschritt unter e) wird bevorzugt unter Entfernung des Staubanteils durchgeführt.

Das nach dem Runden unter Schritt e) entstandene Produkt kann vorzugsweise noch mit Hilfsmitteln beschichtet werden.

Wird ein Rundungsschritt unter e) durchgeführt, so kann danach bevorzugt ein Grobanteil mit Teilchengrößen >1 500 µm abgetrennt und gegebenenfalls in den Prozess zurückgeführt werden.

Die Rußgranulate haben vorzugsweise Schüttdichten von 0,1 bis 2,5 g/cm³.

Als Hilfsmittel können sowohl anorganische als auch organische Substanzen eingesetzt werden.

Als Hilfsmittel werden bevorzugt Wasser, Salze aus der Gruppe der Phosphate, Carbonate, Nitrate, Sulfate, Chloride, Silikate, Aluminate und Borate, Formiate, Oxalate, Zitrate und Tartrate, Polysaccharide, Cellulosederivate, wie z.B. Celluloseether, Celluloseester, Phosphonocarbonsäuren, modifizierte Silane, Silikonöle, Öle aus biologischem Anbau (z.B. Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wässrige Lösungen davon verwendet.

Zusätzlich können beim Mischen vorzugsweise Emulgatoren, Netzmittel und Dispergiermittel in einer Menge von 0,01 bis 5 Gew.-%, bevorzugt 0,01 bis 3 Gew.-%, bezogen auf das Gewicht der eingesetzten Pigmente, eingesetzt werden.

Als Emulgatoren kommen insbesondere Emulgatoren mit HLB-Werten von 7 bis 40, insbesondere von 8 bis 18, für den Einsatz in Baustoffen mit wässrigen Systemen wie z.B. Beton in Frage bestehend aus Alkyl-, Acryl-Resten und hydrophilen Zwischen- und Endgruppen wie z.B. Amide, Amine, Ether, Hydroxyl, Carboxylat, Sulfat, Sulfonat, Phosphat, Amin-Salz, Polyether, Polyamid, Polyphosphat. Die Substanzen können entsprechend ihrem HLB-Wert einzeln oder in Kombination eingesetzt werden.

Als Netzmittel sind besonders Alkylbenzolsulfonate, Fettalkoholsulfate, Fettalkoholethersulfate, Fettalkoholethoxylat, Alkylphenolethoxylat, Alkan-, Olefinsulfonate geeignet.

Als Dispergierhilfsmittel werden vorzugsweise Melaminsulfonate, Naphthalinsulfonate, Metallseifen, Polyvinylalkohole, Polyvinylsulfate, Polyacrylamide, Fettsäuresulfate eingesetzt.

Zur Erhöhung der Stabilität bzw. als Hilfe bei der Verarbeitung der Granulate kann es günstig sein, die Granulate abschließend mit einer zusätzlichen Schicht zu umhüllen. Diese Schicht kann durch Aufbringen von anorganischen Salzen in Lösung, von Polyolen, Ölen oder Wachsen bzw. Polyethern, Polycarboxylaten oder Cellulosederivaten, bevorzugt Carboxymethylcellulose, erzeugt werden.

Den Granulaten können auch beim Mischen zusätzlich Konservierungsstoffe in einer Konzentration von 0,01 bis 1 Gew.-% bezogen auf das Gewicht des Pigments zugesetzt werden. Als Beispiele seien Formaldehyd-abspaltende Verbindungen, phenolische Verbindungen oder Isothiazolinon-Zubereitungen genannt.

Überraschenderweise können für die Press- und Brikettiergranulate, insbesondere wenn diese für die Einarbeitung in wässrige Baustoffsysteme wie Zementmörtel oder Beton bestimmt sind, nicht nur in Wasser lösliche Substanzen als Hilfsmittel eingesetzt werden, sondern auch wasserunlösliche Substanzen, wie z.B. Öle.

Die Hilfsmittel werden bevorzugt in Mengen von 0,001 bis 10 Gew.-%, besonders bevorzugt von 0,01 bis 5 Gew.-%, ganz besonders bevorzugt von 0,1 bis 3 Gew.-%, bezogen auf eingesetztes Pigment eingesetzt.

Die Hilfsmittel können bevorzugt in Verbindung mit weiteren Additiven wie z.B. Emulgatoren, Netzmitteln, Metallseifen usw. eingesetzt werden.

Der Press- oder Brikettierschritt b) erfolgt bevorzugt über eine Walzenpresse oder Matrizenpresse und vorzugsweise bei Linienkräften von 0,1 bis 50 kN/cm, bevorzugt 0,1 bis 20 kN/cm.

Beim Pressen oder Brikettieren (Kompaktieren, Schritt b)) ist eine wichtige Kennziffer die Presskraft (kN) pro cm Walzenbreite (Linienkraft). Beim Kompaktieren zwischen Walzen wird von einer linienförmigen Übertragung der Presskraft ausgegangen, da eine Pressfläche nicht definiert werden kann und deshalb kein Druck (kN/cm²) berechenbar ist.

Die Kompaktierung erfolgt bevorzugt bei niedrigen Linienkräften. Die angewendeten Linienkräfte liegen im Allgemeinen vorzugsweise im unteren Bereich der kommerziell erhältlichen Geräte bevorzugt, zwischen 0,1 und 50 kN/cm. Ganz besonders bevorzugt betragen die Linienkräfte 0,1 bis 20 kN/cm. Kommerziell erhältliche Geräte sind z.B. der Pharmapaktor 200/50 der Firma Bepex GmbH, Leingarten/Deutschland.

Der zusätzliche Trennungsschritt x) erfolgt vorzugsweise mit Siebmaschinen, wie z.B. Trommelsiebe, Schwingsiebe und Vibrationssiebe.

Die Zerkleinerung kann über alle marktüblichen Zerkleinerungsaggregate, wie Brecher, Stachelwalzen, Walzen mit Friktionsvorrichtungen und Siebgranulatoren erfolgen.

Der Zerkleinerungsschritt c) erfolgt vorzugsweise mit Siebgranulatoren oder Siebmühlen, bei denen das Material durch ein Passiersieb mit einer Maschenweite von 0,5 bis 4 mm, besonders bevorzugt von 0,5 bis 2,5 mm, ganz besonders bevorzugt von 1 bis 2 mm gedrückt wird (sogenannte Schroter). Die Rotoren bewegen sich, wie allgemein bekannt, umlaufend oder oszillierend mit einer Umfangsgeschwindigkeit von 0,05 m/sec bis 10 m/sec, vorzugsweise 0,3 bis 5 m/sec. Der Abstand zwischen Rotor und Sieb oder Lochscheibe beträgt 0,1 bis 15 mm, bevorzugt 0,1 bis 5 mm, besonders bevorzugt 1 bis 2 mm.

Als Zerkleinerungsgerät kann z.B. der Flake Crusher der Firma Frewitt, Fribourg/Schweiz eingesetzt werden.

Nach dem Zerkleinern wird der Feinanteil unter 80 µm abgetrennt. Bevorzugt beträgt die Menge dieses Feinanteils 10 bis 50 Gew.-%, besonders bevorzugt 10 bis 30 Gew.-%. Der Feinanteil wird vorzugsweise in den Schritt b) zurückgeführt. Der übrigbleibende Anteil ist rieselfähig, dosierbar, stabil, staubarm und gut dispergierbar. Eine weitere Optimierung kann durch zusätzliches Abrunden erhalten werden.

Der Rundungsschritt unter e) erfolgt vorzugsweise auf einem Drehteller, in einer Drehtrommel oder Drageetrommel, Trommelsieben oder ähnlichen Aggregaten oder in einem Wirbelbett oder Fließbett oder in einer Siebanlage. Hierbei kann der Staubanteil vorzugsweise abgesaugt oder in der Wirbelschicht mit der Luft ausgetragen werden.

Wesentlich bei dem mehrstufigen Verfahren ist, dass im ersten Schritt ein ausreichend kohäsives homogenes Material durch Zugabe des Hilfsmittels in einem Mischer erzeugt wird. Im zweiten Schritt erfolgt dann die Brikettierung oder Pressung.

Das Verfahren gemäß DE-A 43 36 613 oder DE-A 43 36 612 führt durch die Aufbaugranulation auf dem Drehteller zu zwar runden Teilchen, die jedoch inhomogen sind. Sie bestehen aus einem kompakten Kern und einer aufgebauten äußeren Schicht bzw. Schichten, die abgerieben werden können. Diese Produkte sind daher insbesondere bei der pneumatischen Förderung staubend, und die Fließfähigkeit ist nicht besonders gut. Die nach dem erfindungsgemäßen Verfahren hergestellten Produkte haben diese Nachteile nicht, da sie aus homogenen Kompaktteilchen einheitlicher Dichte und Festigkeit bestehen.

Die erfindungsgemäßen Granulate werden zur Einfärbung von Baustoffen, wie z.B. Beton, Zementmörtel und Putze, und zur Einfärbung von organischen Medien, wie Lacken, Kunststoffen und Farbpasten und zur Herstellung von Dispersionsfarben und Slurries verwendet.

Besonders gut eignen sich die erfindungsgemäß hergestellten Granulate zur Einarbeitung in trockene Zementmörtelmischungen und in Putze.

Ein weiterer Gegenstand der Erfindung ist die Verwendung zur Einfärbung von Baustoffen wie Beton. Dazu können die erfindungsgemäßen Brikettier- oder Pressgranulate aus Rußpigmenten mit dem Baustoff in einer Menge von 0,1 bis 10 Gew.-%, bevorzugt 1 bis 5 Gew.-%, bezogen auf Zement, vermischt werden.

Die erfindungsgemäßen Granulate können auch bevorzugt in Dispersionsfarben und Slurries eingesetzt werden.

Ein weiterer Gegenstand der Erfindung ist die Verwendung zur Einfärbung von organischen Medien wie Lacksysteme, Kunststoffe und Farbpasten mit Rußpigmenten. Dazu können die erfindungsgemäßen Brikettier- oder Pressgranulate aus Rußpigmenten mit dem organischen Medium in einer Menge von 0,1 bis 10 Gew.-%, bezogen auf organisches Medium, vermischt werden.

Die Prüfung der Dispergierbarkeit für Baustoffe erfolgt in Zementmörtel über die Farbstärkemessung an mit Weißzement hergestellten Prismen:

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 51-Mischschüssel, Bauform 1551, Drehzahl 140 U/min, Ansatz: 500 g Zement. Nach 100 s werden 3 Mischungsproben (300 g) entnommen und Probekörper (5 x 10 x 2,5 cm) unter Druck hergestellt (300 bar). Härtung der Probekörper: 24 Std. bei 30°C und 95 % rel. Luftfeuchte mit anschließendem Trocknen 4 Stunden bei 60°C. Farbdatenmessung über Dataflash 2000 Datacolor International, Köln, 4 Meßpunkte je Stein, pro Pigmentmischung 12 Messpunkte. Die erhaltenen Mittelwerte werden verglichen mit den Werten einer Referenzprobe. Beurteilt werden der Farbabstand E_{ab} und die Farbstärke (Referenzprobe = 100 %) (DIN 5033, DIN 6174). Die Dispergierbarkeit wird als gut bezeichnet bei einem Farbstärkenunterschied bis 5 % gegenüber der Referenzprobe, als befriedigend bei einem Unterschied bis 10 %.

Die Prüfung des Fließverhaltens erfolgt durch Beurteilung des Auslaufverhaltens aus einem Trichter mit 100 ml Volumen mit 6 mm Öffnung in Anlehnung an ASTM-Test D 1200-88. Das Fließverhalten wird als gut bezeichnet, wenn das Material frei ausläuft. Erfolgt kein Materialfluss bzw. ein Fließen nur nach Klopfen, wird das Fließverhalten als nicht ausreichend betrachtet.

Die Bestimmung des Feinanteils als Siebrückstand erfolgt auf einem VA-Sieb nach DIN 4188 mit 80 µm Maschenweite auf einer Luftstrahlsiebmaschine Typ Alpine 200 LS. Es werden 20 g der zu prüfenden Probe eingesetzt. Das Feingut wird während einer Laufzeit von 5 Minuten abgesaugt und die Menge des Grobanteils auf dem Sieb zurückgewogen.

Die Prüfung der Kunststoffdispergierbarkeit erfolgt nach einer der DIN 53 775, Teil 7 angenäherten Vorschrift: "Prüfung von Farbmitteln in weichmacherhaltigen Polyvinylchlorid (PVC-P) Formmassen; Bestimmung der Dispergierhärte durch Walzen".

Das zu prüfende Pigment wird bei 160 ± 5°C auf einem Mischwalzwerk in PVC dispergiert. Das erhaltene Walzfell wird geteilt und die eine Hälfte anschließend durch Walzen bei Raumtemperatur erhöhten Scherkräften ausgesetzt. Als Maß für die Dispergierbarkeit gilt bei Buntpigmenten der Farbabstand ΔE nach CIELAB (DIN5033, 6174) zwischen heiß- und kaltgewalztem PVC-Fell, bzw. bei Weißpigmenten die Differenz der Normfarbwerte Y (DIN 5033) zwischen heiß- und kaltgewalztem PVC-Fell. Ein gut dispergierbares Pigment ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je kleiner der Farbabstand ΔE bzw. die Differenz der Normfarbwerte Y, desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Angestrebt wird für Granulate eine gleich gute Dispergierbarkeit wie die entsprechender Pigmentpulver, so dass die Kenngrößen ΔE bzw. Y für Pulver und Granulat nicht wesentlich differieren sollen.

Die Feinstaubmessung zur Erfassung der Festigkeit von Granulaten erfolgt in Anlehnung an DIN 55 992. Die Staubungseigenschaften des Granulates können mit dem Heubach "Dustmeter" gemessen werden. Der Austrag an Feinstaub aus einer rotierenden Trommel, durch die ein Luftstrom definierter Stärke strömt, wird an einem Glasfaserfilter gravimetrisch bestimmt. Durch Messungen nach unterschiedlichen Belastungszeiten kann auch der Verlauf der Staubentwicklung als Funktion mechanischer Beanspruchung aufgezeigt werden.

Im Folgenden wird anhand von Beispielen die vorliegende Erfindung näher erläutert, ohne dass in diesen Beispielen eine Einschränkung zu sehen ist.

### Beispiel 1

500 g Ruß Corasol C 30 (Handelsprodukt der Fa. Degussa) bzw. 500 g Ruß Monarch 800 (Handelsprodukt der Fa. Cabot Corp.) wurden mit Ammoniumligninsulfonat und Maschinenöl V 100 in unterschiedlichen Mengen in einem Mischer 18 Minuten gemischt. Die Mischung wurde auf einem Kompaktierer Typ WP50N (Firma Alexanderwerk, Remscheid) mit unterschiedlichen Linienkräften gepresst und danach in einem Feingranulator RFG (Fa. Alexanderwerk, Remscheid) mit einem Sieb einer Maschenweite von 1,5 mm zerkleinert. Das zerkleinerte Produkt wurde über ein Sieb mit einer Maschenweite von 250 µm in zwei Fraktionen aufgetrennt. Die Fraktion über 250 µm wurde getestet und zeigte eine gute Fließfähigkeit (das entsprechende Pulver hatte eine schlechte Fließfähigkeit). Die übrigen Daten der Fraktion sowie des Ausgangspulvers sind der Tabelle 1 zu entnehmen. Die relative Farbstärke in Beton wurde gegenüber dem entsprechenden Ausgangspulver gemessen. Außerdem wurde die relative Farbstärke in Beton auf den Pigmentgehalt im Granulat umgerechnet (theoretischer Wert).

### Beispiel 2

500 g Ruß Corasol C 30 (Handelsprodukt der Fa. Degussa) wurden mit 8 % Ammoniumligninsulfonat und 1 % Maschinenöl V 100 in einem Mischer 18 Minuten gemischt. Die Mischung wurde auf einem Kompaktierer Typ WP50N (Fa. Alexanderwerk, Remscheid) mit 7 kN/cm gepresst und danach in einem Feingranulator RFG (Fa. Alexanderwerk, Remscheid) mit einem Sieb einer Maschenweite von 1,5 mm zerkleinert.

Ein Teil des zerkleinerten Produktes wurde über ein Sieb mit einer Maschenweite von 250 µm in zwei Fraktionen aufgetrennt. Die Fraktion über 250 µm (60 % der Menge) wurde getestet und zeigte eine gute Fließfähigkeit (das entsprechende Pulver hatte eine schlechte Fließfähigkeit).

Der andere Teil des zerkleinerten Produktes (ca. 150 g) inklusive des Feinanteils wurde in einer Trommel von 15 cm Durchmesser bei 60 Umdrehungen pro Minute 5 Minuten lang granuliert. Dabei wurde der Feinanteil zu 100 % aufgranuliert. Auch dieses Produkt zeigte eine gute Fließfähigkeit und eine ausreichende Dispergierbarkeit. Das Staubverhalten im Dustmeter nach Heubach war allerdings für die beiden Produkte deutlich unterschiedlich. Das kompaktierte, geschrotete und nachgranulierte Material wies 1328 mg Staub auf, während das kompaktierte, geschrotete, gesiebte und nicht nachgranulierte Material nur 548 mg Staub im Test entwickelte. Das Ausgangspulver Corasol C 30 entwickelte 2669 mg Staub im Dustmeter.

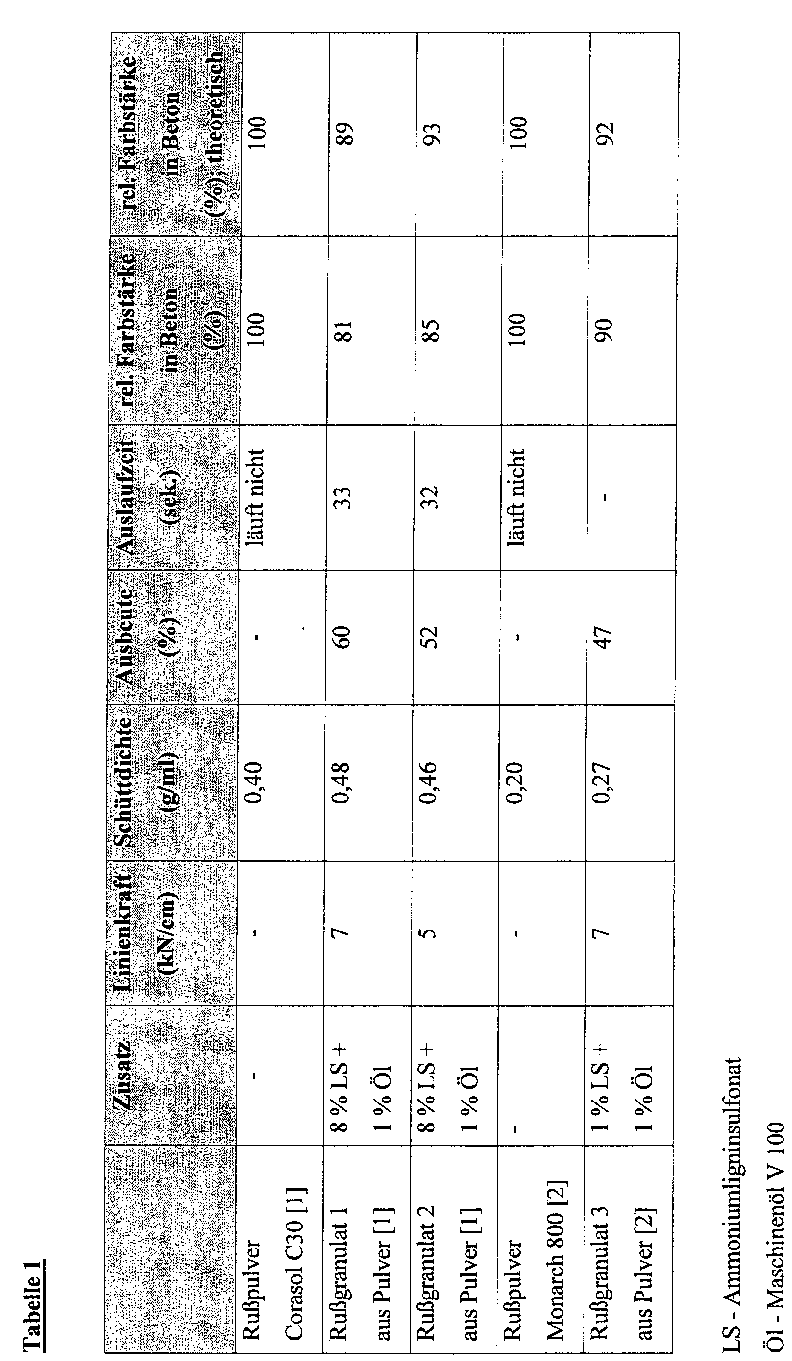

## Patentansprüche

1. Homogene Press- oder Brikettiergranulate, erhältlich aus Rußpigmenten mit Hilfsmitteln, indem
a) ein oder mehrere Rußpigmente mit einem oder mehreren die Verarbeitbarkeit fördernden Hilfsmitteln vermischt werden,
b) diese Mischung einem Press- oder Brikettierschritt unterworfen wird,
c) dieses gepresste oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 und 1000 µm, liegen, als Produkt entnommen wird und gegebenenfalls in einem weiteren Schritt gerundet wird, die andere Fraktion bzw. Fraktionen aus dem Prozess ausgeschleust oder zurückgeführt werden.

2. Press- oder Brikettiergranulate nach Anspruch 1, **dadurch gekennzeichnet, dass** als Hilfsmittel Wasser, Salze aus der Gruppe der Phosphate, Silikate, Aluminate, Borate, Polysaccharide und Cellulosederivate, Öle aus biologischem Anbau, raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wässrige Lösungen davon eingesetzt werden.

3. Press- oder Brikettiergranulate nach Anspruch 1, **dadurch gekennzeichnet, dass** die Hilfsmittel in Mengen von 0,001 bis 10 Gew.-%, bezogen auf eingesetztes Pigment eingesetzt werden.

4. Press- oder Brikettiergranulate nach Anspruch 1, **dadurch gekennzeichnet, dass** der Press- oder Brikettierschritt b) über eine Walzenpresse oder Matrizenpresse und bei Linienkräften von 0,1 bis 50kN/cm, bevorzugt 0,1 bis 20kN/cm erfolgt.

5. Verwendung der Press- oder Brikettiergranulate gemäß Anspruch 1 zur Einfärbung von Baustoffen, wie z.B. Beton, Zementmörtel und Putze.

6. Verwendung der Press- oder Brikettiergranulate gemäß Anspruch 1 zur Einfärbung von organischen Medien, wie z.B. Lacke, Kunststoffe und Farbpasten.

7. Verwendung der Press- oder Brikettiergranulate gemäß Anspruch 1 in Dispersionsfarben oder Slurries.
